# FASCICULE DE BREVET EUROPEEN

(11) **EP 2 794 487 B1**
(45) Date de publication et mention de la délivrance du brevet: **17.03.2021**
(21) Numéro de dépôt: 12813899.7
(22) Date de dépôt: 16.11.2012
(51) Int. Cl.: C01F 7/02, C01F 7/44, B01J 35/10, B01J 37/00, B01J 21/04, C04B 35/111, C04B 35/626

(54) **PROCÉDÉ DE FABRICATION DE PARTICULES SPHÉROÏDALES D'ALUMINE.**
VERFAHREN ZUR HERSTELLUNG VON KUGELFÖRMIGEN ALUMINIUMTEILCHEN
METHOD FOR MANUFACTURING SPHEROIDAL ALUMINA PARTICLES

(30) Priorité: 20.12.2011 FR 1103998
(43) Date de publication de la demande: 29.10.2014
(73) Titulaire: IFP Energies nouvelles, 92500 Rueil-Malmaison (FR)
(72) Inventeur: LACOMBE, Sylvie, F-69390 Vernaison (FR); AVENIER, Priscilla, F-38000 Grenoble (FR); BOUALLEG, Malika, F-69100 Villeurbanne (FR); BAZER-BACHI, Delphine, F-69540 Irigny (FR); EUZEN, Patrick, F-75001 Paris (FR); LOPEZ, Joseph, F-30340 Saint Julien les Rosiers (FR)
(74) Mandataire: IFP Energies nouvelles
(86) Numéro de dépôt international: PCT/FR2012/000466
(87) Numéro de publication internationale: WO 2013/093221

(56) Documents cités:
- EP-A1- 0 001 023
- EP-A1- 2 361 885
- EP-A2- 0 090 994
- FR-A- 1 503 495
- GB-A- 1 152 443
- GB-A- 2 189 780
- US-A- 4 179 408

## Description

### Domaine de l'invention

L'invention se rapporte à un procédé de fabrication de particules sphéroïdales d'alumine. L'invention se rapporte aussi à des particules sphéroïdales d'alumine obtenues selon le procédé de l'invention.

Enfin l'invention concerne des catalyseurs comprenant de telles particules comme support et l'utilisation de tels catalyseurs dans des procédés catalytiques de traitement d'hydrocarbures et notamment dans des procédés de reformage catalytique.

### État de la technique

Les particules sphéroïdales d'alumine utilisées comme support poreux de catalyse sont bien connues de l'homme du métier.

Par exemple le document US 2 422 499 décrit un procédé de fabrication de telles particules en faisant appel au procédé dit d'"égouttage dans l'huile".

Le principe de cette technique consiste à préparer un sol aqueux d'alumine et à égoutter, en fines gouttelettes, le sol d'alumine à travers une buse, dans une colonne comprenant une phase supérieure non-miscible à l'eau et une phase aqueuse inférieure. La mise en forme des particules a alors lieu lors du passage dans la phase non-miscible à l'eau et la coagulation ultérieure dans la phase aqueuse. Une fois recueillies, les particules sont lavées, séchées et calcinées.

Parmi les paramètres à maîtriser au cours de la synthèse de telles particules sphéroïdales, la densité et le volume poreux sont particulièrement importants car ils affectent l'utilisation finale de ces particules.

Il est connu du document FR 1 503 495 que pour abaisser la densité des particules, il est possible d'ajouter des agents porogènes dans le sol d'alumine. Lors de la formation des particules, ces agents porogènes, qui sont ensuite éliminés lors de l'étape de calcination, créent une macroporosité dans la particule. Cette macroporosité a pour effet d'augmenter le volume poreux et donc de diminuer la densité de la particule.

Cependant cette macroporosité a un impact négatif sur la résistance mécanique des supports de faible densité.

La résistance mécanique (en particulier la résistance à l'écrasement et à l'attrition) est un paramètre primordial à prendre en compte pour l'application envisagée de la particule d'alumine en catalyse. En effet, au cours de leur mise en œuvre, e.g. en lit mobile, les particules d'alumine sont soumises à des chocs et des phénomènes de frottement qui peuvent provoquer la formation de fines qui risquent de boucher les installations ou les filtres et qui en outre contribuent à la perte d'une partie du catalyseur chargé dans le réacteur catalytique.

Ainsi il apparaît important d'être capable de fabriquer des particules d'alumine qui présentent deux caractéristiques antagonistes, à savoir une faible densité et une bonne résistance mécanique.

Il est par ailleurs connu du brevet US 4 542 113 un procédé de préparation d'alumine sphéroïdale, où un sol d'alumine ayant une teneur en solides de plus de 20 à 40 % en poids d'alumine est préparé à partir d'hydrate d'alumine, qui se compose de boehmite / pseudo-boehmite, par agitation poussée dans de l'acide dilué aqueux. Le sol d'alumine est amené en présence de 1 à 10 % en poids d'urée à tomber dans une colonne de formage dont la partie supérieure est remplie d'un hydrocarbure liquide et dont la partie inférieure est remplie d'une solution aqueuse d'ammoniac et qui est maintenue à température ambiante. Les particules sphéroïdales ainsi formées sont séchées et activées, et peuvent également être soumises à un traitement de vieillissement connu en soi.

Il est également connu du brevet FR 1 503 495 des gels d'oxyde d'aluminium sphériques préparés en introduisant des gouttes d'une suspension aqueuse coagulable d'alumine hydratée dans une colonne d'un liquide non miscible à l'eau, par exemple une huile minérale, qui peut être maintenue à une température proche de la température ambiante. L'alumine hydratée est préparée par hydrolyse d'aluminium finement divisé ayant une surface spécifique d'environ 75 000 à 1 000 000 mm² par gramme, et le milieu d'hydrolyse est acide du fait de la présence d'un acide non oxydant, par exemple l'acide formique. L'alimentation en alumine hydratée a un rapport du monohydrate d'alumine à l'alumine hydratée amorphe d'au moins 0,5/1, et le monohydrate d'alumine a une taille de cristallite inférieure à 65 A. L'ammoniac peut être ajouté à la colonne pour faciliter la coagulation. D'autres solides, par exemple, l'alumine calcinée, le trihydrate d'alumine, la silice ou le carbone peuvent être incorporés dans la suspension aqueuse, tout comme l'oxychlorure d'aluminium.

### Résumé de l'invention

Un but de l'invention est donc de proposer un procédé de fabrication de particules sphéroïdales d'alumine de faible densité (e.g. densité de remplissage tassée autour de 0,5 g/mL à 0,6 g/mL) et ayant une résistance mécanique satisfaisante pour être utilisées dans les réacteurs catalytiques.

Selon l'invention, le procédé de fabrication de particules sphéroïdales d'alumine comprend les étapes suivantes :
a) préparation d'une suspension comprenant de l'eau, un acide et au moins une poudre de boehmite dont le rapport des tailles de cristallites selon les directions [020] et [120] obtenues par la formule de Scherrer en diffraction des rayons X est compris entre 0,7 et 1 ;
b) ajout d'un agent porogène, d'un tensioactif et éventuellement de l'eau, ou d'une émulsion comprenant au moins un agent porogène, un tensioactif et de l'eau à la suspension de l'étape a) ;
c) mélange de la suspension obtenue à l'étape b) ;
d) mise en forme des particules sphéroïdales par coagulation en goutte à partir de la suspension obtenue à l'étape c) ;
e) séchage des particules obtenues à l'étape d) ;
calcination des particules obtenues à l'étape e), dans lequel l'agent porogène est une coupe pétrolière présentant un point d'ébullition compris entre 220 et 350°C.

La demanderesse a en effet de manière surprenante constaté qu'il était possible de former des particules de faible densité présentant une résistance mécanique au moins équivalente au support d'alumine dense (e.g. densité de remplissage tassée autour de 0,6 g/mL à 0,7 g/mL), tout en limitant la quantité de porogène mise en œuvre dans le procédé, à condition qu'au moins une partie de la poudre de boehmite mise en œuvre présente une structure cristallographique telle que définie plus haut. Ainsi grâce au procédé selon l'invention, on est capable de limiter la formation de macroporosité à l'origine de l'abaissement de la résistance mécanique et de favoriser par contre la formation de mésoporosité à l'origine de la porosité utile pour une utilisation du matériau comme support de catalyseur.

En outre, en limitant la quantité de porogène mise en œuvre, le procédé selon l'invention présente un avantage supplémentaire du point de vue économique, notamment en réduisant les coûts de matière première et de traitement des composés organiques volatiles provenant de la décomposition de l'agent porogène, qui se dégagent lors de l'étape de calcination.

De façon préférée, la suspension aqueuse de boehmite comprend en outre une charge d'alumine ou de précurseur d'alumine. Cette charge peut être choisie dans le groupe formé par l'hydrargilite, la bayerite, les gels amorphes, les alumines dites de transition comportant au moins une phase rhô, chi, êta, gamma, kappa, thêta, delta et alpha. La charge d'alumine peut être sous forme de poudre ou de particules d'alumine obtenues par broyage et tamisage de corps d'alumine façonnés; ces particules ont, après broyage, un diamètre médian inférieur ou égal à 50 µm, de préférence inférieur à 30 µm et de manière encore plus préférée inférieur à 20 µm. Le terme "diamètre médian" désigne le D50, c'est-à-dire le diamètre d'une sphère équivalente tel que 50 % des particules, en volume, ont un diamètre supérieur et 50 % un diamètre inférieur.

L'agent porogène qui convient particulièrement bien pour le procédé est une coupe pétrolière présentant un point d'ébullition compris entre 220 et 350°C et qui sera dégradé au cours de l'étape de calcination.

Conformément à un mode de réalisation, on incorpore par ailleurs des éléments dits "promoteurs" lors de la formation desdites particules. A cette fin, on ajoute dans la suspension aqueuse de poudre de boehmite un sel soluble d'un ou plusieurs éléments choisis parmi les groupes IIIA, IVA, VA et les lanthanides du tableau périodique des éléments.

De manière préférée, l'étape de mise en forme des particules comprend les étapes suivantes :
a) transfert de la suspension dans un pot d'égouttage équipé de buses dont les orifices sont calibrés pour former des gouttelettes ;
b) égouttage de la suspension par gravitation dans une colonne contenant une phase organique en partie supérieure et une phase aqueuse basique en partie inférieure de sorte à récolter les particules sphéroïdales en pied de phase aqueuse basique.

L'étape de séchage des particules sphéroïdales selon le procédé de l'invention est effectuée à une température comprise entre 60 et 150°C, par exemple pendant 0,5 à 20 heures.

L'étape de calcination des particules sphéroïdales est effectuée à une température comprise entre 450 et 900°C, préférentiellement comprise entre 550 et 800°C pendant 0,5 à 12 heures, de préférence entre 1 et 8 heures, de manière encore préférée entre 1 et 5 heures.

Ainsi, après calcination, il est possible de former des particules sphéroïdales possédant généralement un diamètre moyen compris entre 1,2 et 3 mm, une surface spécifique B.E.T comprise entre 150 et 300 m²/g, et une valeur moyenne d'écrasement grain par grain (EGG), d'au moins 2,5 daN, de préférence d'au moins 3,0 daN.

La valeur de l'EGG est obtenue via un test normalisé (norme ASTM D4179-01) qui consiste à soumettre un matériau sous forme d'objet millimétrique, comme une bille dans le cas de la présente invention, à une force de compression générant la rupture. Ce test est donc une mesure de la résistance en traction du matériau. L'analyse est répétée sur un certain nombre de solides pris individuellement et typiquement sur un nombre de solides compris entre 10 et 200. La moyenne des forces latérales de rupture mesurées constitue l'EGG moyen qui est exprimé dans le cas des particules sphéroïdales en unité de force (N).

Les particules sphéroïdales après calcination présentent généralement:
- un volume d'isotherme d'adsorption d'azote (que nous nommerons V_{méso}), représentatif du volume mésoporeux (diamètre de pore compris entre 2 et 50 nm), qui est compris entre 0,65 et 0,85 mL/g et
- un volume des pores de diamètre inférieure à 7 µm (que nous désignons par V_{méso+macro}), mesuré par porosimétrie au mercure, qui est compris entre 0,65 et 0,85 mL/g et
pour laquelle le ratio Q = [(V_{méso+macro} - V_{méso}) / (V_{méso+macro})] est inférieur à 10%, de préférence inférieur à 8%, de manière encore plus préférée inférieur à 5%. Le ratio Q exprime ainsi le volume des macropores par rapport à la somme des volumes des méso- et macropores.

Ainsi dans le contexte de la présente invention, le terme "volume mésoporeux" désigne le volume constitué par les pores de diamètre compris entre 2 et 50 nm tandis que le terme "volume macroporeux" désigne le volume occupé par les pores de diamètre compris entre 50 nm et 7 µm.

La mesure de l'isotherme d'adsorption d'azote est effectuée en suivant la norme ASTM D3663-03. Le volume poreux dit V_{méso} est pris comme le volume d'azote mesuré lors de l'étape d'adsorption et correspondant à une pression relative P/Pₛ (pression de mesure sur pression de vapeur saturante) égale à 0,99. Quant à la mesure de volume poreux par porosimétrie mercure, elle est effectuée suivant la norme ASTM D4284-03.

Après calcination, les particules sphéroïdales selon l'invention présentent généralement une valeur de densité de remplissage tassée (DRT) comprise entre 0,5 et 0,6 g/ml. La mesure de DRT consiste à introduire les billes dans une éprouvette dont on a préalablement déterminé le volume puis, par vibration, à les tasser jusqu'à obtenir un volume constant. La masse volumique apparente du produit tassé est calculée en comparant la masse introduite et le volume occupé après tassement. L'incertitude sur la mesure est généralement de l'ordre de +- 0,01g/mL.

Ainsi, l'invention concerne par ailleurs des particules sphéroïdales d'alumine susceptibles d'être obtenues par le procédé selon l'invention et comprenant un volume d'isotherme d'adsorption d'azote, appelé V_{méso}, représentatif du volume mésoporeux, qui est compris entre 0,65 et 0,85 mL/g et un volume des pores de diamètre inférieur à 7 µm, appelé V_{méso+macro}, mesuré par porosimétrie au mercure, qui est compris entre 0,65 et 0,85 mL/g et pour lesquelles le ratio Q = [(V_{méso+macro} - V_{méso}) / (V_{méso+macro})] est inférieur à 10 %, lesdites particules comprenant un diamètre moyen compris entre 1,2 et 3 mm, une surface spécifique B.E.T comprise entre 150 et 300 m²/g et une valeur de densité de remplissage tassée (DRT) comprise entre 0,5 et 0,6 g/ml.

Les particules sphéroïdales d'alumine selon l'invention ont généralement une valeur moyenne d'écrasement grain par grain (EGG) d'au moins 2,5 daN, de préférence d'au moins 3,0 daN.

L'invention se rapporte également à un catalyseur comprenant au moins un ou plusieurs métaux choisis parmi le groupe VIII du tableau périodique, déposés sur un support formé par des particules sphéroïdales d'alumine selon la présente invention. Le catalyseur selon l'invention peut inclure éventuellement également au moins un promoteur choisi parmi les groupes IIIA, IVA, VA du tableau périodique et les lanthanides. Ces éléments promoteurs sont présents dans le catalyseur, après calcination, à une teneur généralement comprise entre 0,01 à 2% poids de catalyseur.

Le catalyseur selon l'invention peut également comprendre de préférence un composé halogéné, sélectionné dans le groupe constitué par le fluor, le chlore, le brome et l'iode. La teneur en composé halogéné est généralement comprise entre 0,1 et 8% poids, de préférence entre 0,2 et 5% poids de catalyseur après calcination.

A titre d'exemple, un catalyseur utile comme catalyseur de reformage de coupe pétrolière peut comprendre du platine, de l'étain (optionnellement d'autres métaux) et du chlore, déposés sur un support sphéroïdal d'alumine obtenu selon le procédé de la présente invention.

Ces catalyseurs sont aussi utiles dans des réactions de reformage catalytique ou de production d'aromatiques par mise en contact dudit catalyseur avec une charge hydrocarbonée. Les procédés de reformage catalytique permettent d'augmenter l'indice d'octane des fractions essences provenant de la distillation du pétrole brut et/ou d'autres procédés de raffinage tels que par exemple le craquage catalytique ou le craquage thermique.

Enfin ces catalyseurs peuvent trouver des applications dans le reformage à la vapeur, le craquage, l'hydrocraquage, l'hydrogénation, la déshydrogénation, la déshydrocyclisation d'hydrocarbures ou d'autres composés organiques.

### Description détaillée de modes de réalisation particuliers

Le mode opératoire de préparation des particules sphéroïdales d'alumine selon l'invention comprend ainsi les étapes principales suivantes :
a) préparation d'une suspension comprenant de l'eau, un acide et au moins une poudre de boehmite dont le rapport des tailles de cristallites selon les directions [020] et [120] obtenues par la formule de Scherrer en diffraction des rayons X est compris entre 0,7 et 1 ;
b) ajout d'un agent porogène, d'un tensioactif et éventuellement de l'eau, ou d'une émulsion comprenant au moins un agent porogène, un tensioactif et de l'eau à la suspension de l'étape a) ;
c) mélange de la suspension obtenue à l'étape b) ;
d) mise en forme des particules sphéroïdales par coagulation en goutte à partir de la suspension obtenue à l'étape c) ;
e) séchage des particules obtenues à l'étape d) ;
f) calcination des particules obtenues à l'étape e).

Les poudres de boehmite dont le rapport des tailles de cristallites selon les directions [020] et [120] obtenues par la formule de Scherrer en diffraction des rayons X est compris entre 0,7 et 1 sont connues.

Selon une variante, cette poudre de boehmite peut également être synthétisée par alcalinisation d'une solution de nitrate d'aluminium par une solution de soude, généralement à température ambiante et pH contrôlé, généralement autour d'un pH de 10. La suspension est ensuite mûrie, par exemple une semaine à l'étuve à 95°C sans agitation. Le pH de la suspension après mûrissement évolue ; le pH augmente et le pH final est par exemple égal à 11,5. Le solide est récupéré par filtration puis lavé, par exemple dans un volume d'eau environ égal au volume de départ, puis séché sous courant d'air, généralement à température ambiante.

La poudre de boehmite ainsi obtenue est composée de cristallites dont le rapport des tailles de cristallites selon les directions [020] et [120] obtenues par la formule de Scherrer en diffraction des rayons X est compris entre 0,7 et 1.

La diffraction des rayons X sur les boehmites a été effectuée en utilisant la méthode classique des poudres au moyen d'un diffractomètre.

La formule de Scherrer est une formule utilisée en diffraction des rayons X sur des poudres ou échantillons polycristallins qui relie la largeur à mi-hauteur des pics de diffraction à la taille des cristallites.

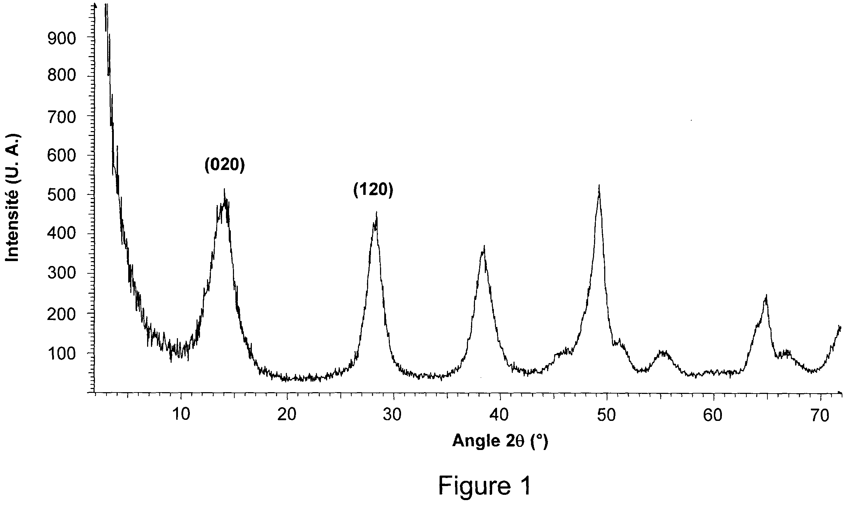

A titre d'exemple, la figure 1 représente un diffractogramme d'une boehmite obtenu avec un rayonnement au cuivre, avec identification des raies de diffraction des plans (020) et (120) prises en compte pour la détermination des tailles de cristallites.

Lorsqu'une émulsion est préparée dans l'étape b), la préparation de l'émulsion se fait en mélangeant l'agent porogène, le tensio-actif et l'eau sous agitation.

Le taux d'agent porogène, exprimé comme étant le rapport de la masse d'agent porogène sur la masse totale d'eau engagée dans la suspension obtenue à l'étape b), est compris entre 0,2 et 30%, de préférence entre 0,5 et 20%, de manière encore plus préférée entre 0,5 et 10%, et de manière particulièrement préférée entre 0,5 et 8%. L'agent porogène est un produit non totalement miscible dans l'eau, éliminable par combustion et liquide à température ambiante. Il peut être choisi parmi les graisses, les huiles et cires minérales, les corps gras, les hydrocarbures et les coupes pétrolières. Par exemple l'agent porogène est une coupe paraffinique ayant de 10 à 14 atomes de carbone, formée de normal- et d'iso-paraffines, et présentant un point d'ébullition compris entre 220 et 350°C.

Les tensio-actifs qui conviennent particulièrement bien sont les tensio-actifs non-ioniques ou les tensio-actifs ioniques, par exemple cationiques, seuls ou en mélanges. De façon préférée, on utilisera des tensio-actifs non ioniques. La proportion de tensioactif présent dans l'émulsion, est définie comme étant égale au rapport de la masse de tensioactif sur la masse de porogène. Ce rapport est compris entre 1 et 25% en poids, de préférence entre 1 et 15% et de manière très préférée entre 3 et 10%.

La quantité d'eau dans l'émulsion représente de 5 à 20 % poids de la quantité d'eau totale correspondant au mélange (suspension de boehmite et émulsion).

L'émulsion est préparée à une température comprise entre 15 et 60°C, de préférence entre 20 et 40°C.

Il est également possible d'ajouter l'agent porogène, le tensio-actif et optionnellement de l'eau directement dans la suspension aqueuse contenant la boehmite, c'est-à-dire sans formation d'une émulsion au préalable, soit en les ajoutant en même temps, soit par des étapes successives. Dans ce cas, on utilise les mêmes proportions des différents constituants décrites ci-dessus.

La préparation de la suspension est réalisée par mélange sous agitation vigoureuse d'une solution aqueuse acide dans laquelle on a ajouté un ou plusieurs types de poudre de boehmite. Cependant, selon l'invention au moins une poudre de boehmite présente un rapport des tailles de cristallites selon les directions [020] et [120] obtenues par la formule de Scherrer en diffraction des rayons X compris entre 0,7 et 1. Dans le cas où plusieurs poudres de boehmite sont utilisées, la proportion de boehmite présentant un rapport des tailles de cristallites selon les directions [020] et [120] obtenues par la formule de Scherrer en diffraction des rayons X compris entre 0,7 et 1 est au moins égale à 10% en poids par rapport à la quantité totale de poudre de boehmite, de manière préférée au moins égale à 30 % en poids et de manière particulièrement préférée au moins égale à 50 %.

Lors de la préparation de la suspension de boehmite, il est possible d'ajouter une charge d'alumine ou de précurseur d'alumine. La quantité de charge mise en œuvre, exprimée en % en poids d'Al₂O₃, est inférieure ou égale à 30% en poids par rapport au poids total d'équivalent Al₂O₃ de la suspension. Cette charge peut être choisie dans le groupe formé par l'hydrargilite, la bayerite, les gels amorphes, les alumines dites de transition comportant au moins une phase rhô, chi, êta, gamma, kappa, thêta, delta et alpha. La charge d'alumine peut être sous forme de poudre ou de particules d'alumine obtenues par broyage et tamisage de corps d'alumine façonnés; ces particules ont, après broyage, un diamètre médian inférieur ou égal à 50 µm, de préférence inférieur à 30 µm et de manière encore plus préférée inférieur à 20 µm. Le terme "diamètre médian" désigne le D50, c'est-à-dire le diamètre d'une sphère équivalente tel que 50 % des particules, en volume, ont un diamètre supérieur et 50 % un diamètre inférieur.

Éventuellement, la suspension peut comprendre un sel d'un ou plusieurs éléments choisis parmi les groupes IIIA, IVA, VA et les lanthanides, qui agissent comme promoteur. Ces éléments seront ainsi incorporés dans les particules sphéroïdales finales après séchage et calcination. La proportion du ou des sels métalliques est calculée pour que la teneur massique en éléments des groupes IIIA, IVA, VA ou en lanthanides dans le produit final, après calcination, soit comprise entre 0,01 et 2% poids, de manière préférée entre 0,05 et 1% poids.

Le taux d'acide engagé dans la suspension est tel que le rapport de la masse dudit acide rapporté à la masse sèche de la ou des sources de boehmite et de la charge (si celle-ci est présente dans la suspension), soit compris entre 0,5 et 20 %, de préférence entre 1 et 15%. A titre d'exemple, la solution aqueuse acide est une solution d'un acide minéral fort, tel que HNO₃ ou H₂SO₄.

La proportion d'eau engagée dans la suspension, est calculée de telle sorte que le rapport de la masse sèche (correspondant à la masse de poudre de boehmite plus éventuellement la charge, exprimée en équivalent Al₂O₃) sur la masse d'eau totale du mélange soit compris entre 10 et 50%, de préférence entre 15 et 40%.

Après mélange de la suspension et de l'émulsion ou après l'ajout de l'agent porogène, du tensioactif et éventuellement d'eau dans la suspension, l'agitation de la solution ainsi obtenue est maintenue jusqu'à ce que la viscosité de ladite solution soit comprise entre 200 et 700 MPa.s, de préférence entre 250 et 400 MPa.s. Ainsi, la solution présente les propriétés rhéologiques adaptées pour être égouttée au travers des buses du pot d'égouttage.

Une méthode qui convient particulièrement bien pour la mise en forme est la coagulation en goutte. Cette méthode consiste à faire passer la suspension obtenue à l'étape b), par exemple le mélange (suspension d'alumine + émulsion) dans un pot d'égouttage constitué de buses ayant un orifice de taille calibrée de manière à former des gouttelettes. Le pot d'égouttage est placé en tête d'une colonne contenant une phase supérieure organique et une phase inférieure constituée par une phase aqueuse basique. La phase organique est choisie d'une manière telle qu'elle présente une masse volumique légèrement inférieure à celle de l'eau.

C'est lors du passage de la gouttelette à travers la phase organique qu'a lieu la mise en forme des sphères tandis que la gélification (ou coagulation) s'effectue dans la phase aqueuse.

Des additifs de type tensioactifs ou agents de transfert de phase peuvent être ajoutés dans la phase aqueuse pour favoriser le passage de l'interface et la coagulation des particules dans la phase aqueuse basique.

Dans le cadre de l'invention, la phase organique non-miscible peut être choisie parmi les graisses, les huiles et cires minérales, les corps gras, les hydrocarbures et les coupes pétrolières. De préférence la phase organique est une coupe paraffinique ayant de 10 à 14 atomes de carbone, formée de normal- et d'iso-paraffines, et présentant un point d'ébullition compris entre 220 et 350°C.

La phase aqueuse basique est par exemple une solution d'ammoniaque, de carbonate d'ammonium, d'amines. De préférence la phase aqueuse basique est une solution d'ammoniaque.

A l'issue de l'étape de formation des particules sphéroïdales, les billes sont récupérées et séparées de la phase aqueuse sur un tamis. Il est également possible de faire subir aux particules ainsi formées une ou plusieurs étapes de mûrissement, comme enseigné dans la demande EP 001 023.

Les billes sont séchées à une température comprise entre 60 et 150°C, sous air sec ou humide, pendant généralement entre 0,5 et 20 heures. Le protocole de séchage peut éventuellement comporter un ou plusieurs paliers en température. Il peut éventuellement requérir des taux d'hygrométrie variables au cours du séchage, de préférence entre 40 et 1000 g d'eau par kg d'air sec, de manière encore plus préférée entre 100 et 1000 g d'eau par kg d'air sec.

Les billes sont ensuite calcinées à une température comprise entre 450 et 900°C, préférentiellement comprise entre 550 et 800°C. La calcination dure généralement une à quelques heures, préférentiellement entre 0,5 et 12 heures, de préférence entre 1 et 8 heures, de manière encore préférée entre 1 et 5 heures. Cette étape de calcination peut comprendre un ou plusieurs paliers de température.

### Exemples

La diffraction des rayons X sur les boehmites des exemples présentés ci-dessous a été effectuée en utilisant la méthode classique sur poudres au moyen d'un diffractomètre Brüker D5005 (CuKα1+2= 0.15418 nm) équipé d'un monochromateur arrière courbe graphite et d'un détecteur à scintillation. Les analyses des solides ont été enregistrées en mode Debye-Scherrer de 3 à 80° (2θ) avec un pas de 0,02° pendant 8 secondes. Les raies correspondant aux plans de diffraction (020) et (120) se situent alors à environ 14,5° 2θ et 28° 2θ respectivement.

La viscosité a été mesurée à l'aide d'un rhéomètre cone-plan à un taux de cisaillement de 100s⁻¹.

### Exemple 1 (comparatif)

Le support de l'exemple 1 est préparé en utilisant une boehmite de type Pural SB3 commercialisée par Sasol dont le diagramme de diffraction des rayons X présente un rapport des tailles de cristallites selon les directions [020] et [120] obtenues par la formule de Scherrer de 0,66.

Une suspension contenant 20% de matière minérale (exprimée en % d'Al₂O₃) est préparée en mélangeant une charge d'alumine γ ayant un diamètre médian en volume D50=50µm et la poudre de boehmite Pural SB3 dans une solution aqueuse acidifiée contenant 3.6% poids d'HNO₃/Al₃O₃.

La fraction solide d'Al₂O₃ est apportée à 88% poids par la boehmite et à 12% par la charge d'alumine y. Cette suspension contient, en outre, un agent porogène et un tensioactif. L'agent porogène est une phase organique comprenant un mélange de paraffines contenant entre 10 et 12 atomes de carbone dont la température d'ébullition est d'environ 290°C et de densité 0,75 g/cm³. Le tensioactif est du Galoryl, agent émulsionnant commercial. Ces composés sont introduits dans les proportions suivantes : fraction massique de porogène / eau = 9,4% et fraction massique de tensioactif / porogène = 6%.

Le système est soumis à une agitation à 600 rpm jusqu'à l'obtention d'une suspension aux propriétés rhéologiques adaptées à son égouttage (viscosité 250MPa.s).

La colonne d'égouttage est chargée avec une solution ammoniacale à une concentration de 28g/L et une solution organique constituée par la même coupe pétrolière que celle utilisée comme agent porogène dans la préparation de l'émulsion (phase organique en couche supérieure). La suspension est égouttée par l'intermédiaire de buses calibrées. Les billes sont récupérées en fond de colonne et placées dans une étuve ventilée à 120°C sous air humide contenant 200g d'eau / kg air sec pendant 12h. Elles sont ensuite calcinées sous air sec à 650°C pendant 3 heures. Les billes obtenues ont un diamètre de 1,9 mm.

### Exemple 2 (selon l'invention)

Une boehmite a été synthétisée par alcalinisation d'une solution de nitrate d'aluminium 0,1 mol.L⁻¹ par une solution de soude 1 mol.L⁻¹ à température ambiante et pH contrôlé autour de 10. La suspension est ensuite mûrie une semaine à l'étuve à 95°C sans agitation. Le pH de la suspension après mûrissement évolue ; le pH final est égal à 11,5. Le solide est récupéré par filtration puis lavé dans un volume d'eau environ égal au volume de départ, puis séché sous courant d'air, à température ambiante. La poudre de boehmite présente un diagramme de diffraction des rayons X dont le rapport des tailles de cristallites selon les directions [020] et [120] obtenues par la formule de Scherrer est de 0,79.
Le support de l'exemple 2 est préparé en utilisant la boehmite ainsi synthétisée.
Une suspension contenant 20% de matière minérale (exprimée en % d'Al₂O₃) est préparée en mélangeant une charge d'alumine y ayant un diamètre médian en volume D50=50µm et la poudre de boehmite dans une solution aqueuse acidifiée contenant 10% masse d'HNO₃/Al₂O₃.

La fraction solide d'Al₂O₃ est apportée à 88% poids par la boehmite et à 12% poids par la charge d'alumine y. Cette suspension contient, en outre, un agent porogène et un tensioactif. L'agent porogène est une phase organique comprenant un mélange de paraffines contenant entre 10 et 12 atomes de carbone dont la température d'ébullition est d'environ 290°C et de densité 0,75 g/cm³. Le tensioactif est du Galoryl. Ces composés sont introduits dans les proportions suivantes : fraction massique de porogène / eau = 1,6% et fraction massique de tensio actif / porogène = 6%.

Le système est soumis à une agitation à 600 rpm jusqu'à l'obtention d'une suspension aux propriétés rhéologiques adaptées à son égouttage (viscosité 250MPa.s).

La colonne d'égouttage est chargée avec une solution ammoniacale à une concentration de 28g/L et une solution organique constituée par la même coupe pétrolière que celle utilisée comme agent porogène dans la préparation de l'émulsion. La suspension est égouttée par l'intermédiaire de buses calibrées. Les billes sont récupérées en fond de colonne et placées dans une étuve ventilée à 120°C sous air humide contenant 200g d'eau / kg air sec pendant 12h. Elles sont ensuite calcinées sous air sec à 650°C pendant 3 heures. Les billes obtenues ont un diamètre de 1,9 mm.

### Exemple 3 (selon l'invention)

Une boehmite a été synthétisée par alcalinisation d'une solution de nitrate d'aluminium 0,1 mol.L⁻¹ par une solution de soude 1 mol.L⁻¹ à température ambiante et pH contrôlé autour de 10. La suspension est ensuite mûrie une semaine à l'étuve à 95°C sans agitation. Le pH de la suspension après mûrissement évolue ; le pH final est égal à 11,5. Le solide est récupéré par filtration puis lavé dans un volume d'eau environ égal au volume de départ. Le solide est remis en suspension dans l'eau et autoclavé à 150°C pendant 4h. La suspension est centrifugée puis séchée sous courant d'air, à température ambiante.

Le support de l'exemple 3 est préparé en utilisant la boehmite ainsi synthétisée dont le diagramme de diffraction des rayons X présente un rapport des tailles de cristallites selon les directions [020] et [120] obtenues par la formule de Scherrer de 0,93.

Une suspension contenant 25% de matière minérale (exprimée en % d'Al₂O₃) est préparée en mélangeant une charge d'alumine y ayant un diamètre médian en volume D50=50µm et la poudre de boehmite dans une solution aqueuse acidifiée contenant 15% masse d'HNO₃/Al₃O₃.

La fraction solide d'Al₂O₃ est apportée à 88% poids par la boehmite et à 12% par la charge d'alumine y. Cette suspension contient, en outre, un agent porogène et un tensioactif. L'agent porogène est une phase organique comprenant un mélange de paraffines contenant entre 10 et 12 atomes de carbone dont la température d'ébullition est d'environ 290°C et de densité 0,75 g/cm³. Le tensioactif est du Galoryl. Ces composés sont introduits dans les proportions suivantes : fraction massique de porogène / eau = 1,4% et fraction massique de tensioactif / porogène = 6%.

Le système est soumis à une agitation à 600 rpm jusqu'à l'obtention d'une suspension aux propriétés rhéologiques adaptées à son égouttage (viscosité 250MPa.s).

La mise en forme par coagulation en goutte est effectuée selon l'exemple 1. Les billes sont récupérées en fond de colonne et placées dans une étuve ventilée à 120°C sous air humide contenant 200g d'eau / kg air sec pendant 12h. Elles sont ensuite calcinées sous air sec à 600°C pendant 3 heures. Les billes obtenues ont un diamètre de 1,9 mm.

### Exemple 4 (selon l'invention)

Une boehmite synthétisée par alcalinisation d'une solution de nitrate d'aluminium 0,1 mol.L⁻¹ par une solution de soude 1 mol.L⁻¹ à température ambiante et pH contrôlé autour de 10. La suspension est ensuite mûrie une semaine à l'étuve à 95°C sans agitation. Le pH de la suspension après mûrissement évolue ; le pH final est égal à 11,5. Le solide est récupéré par filtration puis lavé dans un volume d'eau environ égal au volume de départ. Le solide est remis en suspension dans l'eau et autoclavé à 180°C pendant 24h. La suspension est centrifugée puis séchée sous courant d'air, à température ambiante. La poudre de boehmite présente un diagramme de diffraction des rayons X dont le rapport des tailles de cristallites selon les directions [020] et [120] obtenues par la formule de Scherrer est de 0,91.

Le support de l'exemple 4 est préparé en utilisant la boehmite synthétisée.

Une suspension contenant 25% de matière minérale (exprimée en % d'Al₂O₃) est préparée en mélangeant la poudre de boehmite dans une solution aqueuse acidifiée contenant 18% masse d'HNO₃/Al₂O₃.

Cette suspension contient, en outre, un agent porogène et un tensioactif. L'agent porogène est une phase organique comprenant un mélange de paraffines contenant entre 10 et 12 atomes de carbone dont la température d'ébullition est d'environ 290°C et de densité 0,75 g/cm³. Le tensioactif est du Galoryl. Ces composés sont introduits dans les proportions suivantes : fraction massique de porogène / eau = 1,1% et fraction massique de tensioactif / porogène = 6%.

Le système est soumis à une agitation à 600 rpm jusqu'à l'obtention d'une suspension aux propriétés rhéologiques adaptées à son égouttage (viscosité 250MPa.s).

La mise en forme par coagulation en goutte est effectuée selon l'exemple 1. Les billes sont récupérées en fond de colonne et placées dans une étuve ventilée à 120°C sous air humide contenant 200g d'eau / kg air sec pendant 12h. Elles sont ensuite calcinées sous air sec à 550°C pendant 3 heures. Les billes obtenues ont un diamètre de 1,9 mm.

### Exemple 5 (selon l'invention)

Le support de l'exemple 5 est préparé en utilisant une source de boehmite comprenant 30% poids de Pural SB3 et 70% poids de boehmite synthétisée selon l'exemple 2.

Une suspension contenant 20% de matière minérale (exprimée en % d'Al₂O₃) est préparée en mélangeant une charge d'alumine y ayant un diamètre médian en volume D50=50µm et la source de boehmite dans une solution aqueuse acidifiée contenant 12% masse d'HNO₃/Al₃O₃.

La fraction solide d'Al₂O₃ est apportée à 88% poids par la source boehmite et à 12% par la charge d'alumine y. Cette suspension contient, en outre, un agent porogène et un tensioactif. L'agent porogène est une phase organique comprenant un mélange de paraffines contenant entre 10 et 12 atomes de carbone dont la température d'ébullition est d'environ 290°C et de densité 0,75 g/cm³. Le tensioactif est du Galoryl. Ces composés sont introduits dans les proportions suivantes : fraction massique de porogène / eau = 3% et fraction massique de tensio actif / porogène = 6%.

Le système est soumis à une agitation à 600 rpm jusqu'à l'obtention d'une suspension aux propriétés rhéologiques adaptées à son égouttage (viscosité 250MPa.s).

La mise en forme par coagulation en goutte est effectuée selon l'exemple 1. Les billes sont récupérées en fond de colonne et placées dans une étuve ventilée à 120°C sous air humide contenant 200g d'eau / kg air sec pendant 12h. Elles sont ensuite calcinées sous air sec à 650°C pendant 3 heures. Les billes obtenues ont un diamètre de 1,9 mm.

### Exemple 6 (selon l'invention)

Le support de l'exemple 6 est préparé en utilisant la boehmite synthétisée dans l'exemple 2.

Une suspension contenant 30% de matière minérale (exprimée en % d'Al₂O₃) est préparée en mélangeant une charge d'alumine y ayant un diamètre médian en volume D50=15µm et la poudre de boehmite de l'exemple 2 dans une solution aqueuse acidifiée contenant 20% masse d'HNO₃/Al₂O₃.

La fraction solide d'Al₂O₃ est apportée à 80% poids par la boehmite et à 20% par la charge d'alumine y. Cette suspension contient, en outre, un agent porogène et un tensioactif. L'agent porogène est une phase organique comprenant un mélange de paraffines contenant entre 10 et 12 atomes de carbone dont la température d'ébullition est d'environ 290°C et de densité 0,75 g/cm³. Le tensioactif est du Galoryl. Ces composés sont introduits dans les proportions suivantes : fraction massique de porogène / eau = 1,6% et fraction massique de tensio actif / porogène = 6%.

Le système est soumis à une agitation à 600 rpm jusqu'à l'obtention d'une suspension aux propriétés rhéologiques adaptées à son égouttage (viscosité 250MPa.s).

La mise en forme par coagulation en goutte est effectuée selon l'exemple 1. Les billes sont récupérées en fond de colonne et placées dans une étuve ventilée à 120°C sous air humide contenant 200g d'eau / kg air sec pendant 12h. Elles sont ensuite calcinées sous air sec à 650°C pendant 3 heures. Les billes obtenues ont un diamètre de 1,9 mm.

### Exemple 7 (selon l'invention)

Le support de l'exemple 7 est préparé en utilisant la boehmite synthétisée dans l'exemple 2.

Une suspension contenant 15% de matière minérale (exprimée en % d'Al₂O₃) est préparée en mélangeant une charge d'alumine y ayant un diamètre médian en volume D50=15µm et la boehmite de l'exemple 2 dans une solution aqueuse acidifiée contenant 7% masse d'HNO₃/Al₃O₃. A cette suspension a été incorporée une quantité de SnCl2 suffisante pour obtenir un support dont le pourcentage en poids de Sn (agent promoteur) est de 0,3% après calcination.

La fraction solide d'Al₂O₃ est apportée à 88% poids par la boehmite et à 12% par la charge d'alumine γ. Cette suspension contient, en outre, un agent porogène et un tensioactif. L'agent porogène est une phase organique comprenant un mélange de paraffines contenant entre 10 et 12 atomes de carbone dont la température d'ébullition est d'environ 290°C et de densité 0,75 g/cm³. Le tensioactif est du Galoryl. Ces composés sont introduits dans les proportions suivantes : fraction massique de porogène / eau = 1,6% et fraction massique de tensio actif / porogène = 6%.

Le système est soumis à une agitation à 600 rpm jusqu'à l'obtention d'une suspension aux propriétés rhéologiques adaptées à son égouttage (viscosité 250MPa.s).

La mise en forme par coagulation en goutte est effectuée selon l'exemple 1. Les billes sont récupérées en fond de colonne et placées dans une étuve ventilée à 120°C sous air humide contenant 200g d'eau / kg air sec pendant 12h. Elles sont ensuite calcinées sous air sec à 650°C pendant 3 heures. Les billes obtenues ont un diamètre de 1,9 mm.

### Exemple 8 (selon l'invention)

Le support de l'exemple 8 est préparé en utilisant la boehmite synthétisée dans l'exemple 2.

Une suspension contenant 17% de matière minérale (exprimée en % d'Al₂O₃) est préparée en mélangeant une charge d'alumine y ayant un diamètre médian en volume D50=10µm et la boehmite de l'exemple 2 dans une solution aqueuse acidifiée contenant 6% masse d'HNO₃/Al₂O₃. A cette suspension ont été incorporées des quantités de SnCl₂ et de In(NO₃)₃ suffisantes pour obtenir un support dont le pourcentage en poids de Sn et de In sont de 0,3% et 0,2% respectivement, après calcination.

La fraction solide d'Al₂O₃ est apportée à 90% poids par la boehmite et à 10% par la charge d'alumine y. Cette suspension contient, en outre, un agent porogène et un tensioactif. L'agent porogène est une phase organique comprenant un mélange de paraffines contenant entre 10 et 12 atomes de carbone dont la température d'ébullition est d'environ 290°C et de densité 0,75 g/cm³. Le tensioactif est du Galoryl. Ces composés sont introduits dans les proportions suivantes : fraction massique de porogène / eau = 1,6% et fraction massique de tensio actif / porogène = 6%.

Le système est soumis à une agitation à 600 rpm jusqu'à l'obtention d'une suspension aux propriétés rhéologiques adaptées à son égouttage (viscosité 250MPa.s).

La mise en forme par coagulation en goutte est effectuée selon l'exemple 1. Les billes sont récupérées en fond de colonne et placées dans une étuve ventilée à 120°C sous air humide contenant 200g d'eau / kg air sec pendant 12h. Elles sont ensuite calcinées sous air sec à 650°C pendant 3 heures. Les billes obtenues ont un diamètre de 1,9 mm.

### Exemple 9 (selon l'invention)

Le support de l'exemple 9 est préparé en utilisant la boehmite synthétisée dans l'exemple 2.

Une suspension contenant 30% de matière minérale (exprimée en % d'Al2O3) est préparée en mélangeant une charge d'alumine y ayant un diamètre médian en volume D50=10µm et la boehmite de l'exemple 2 dans une solution acidifiée contenant 7% masse d'HNO₃/Al₃O₃. A cette suspension ont été incorporées des quantités de SnCl₂ et Ce(NO₃)₃ suffisantes pour obtenir un support dont le pourcentage en poids de Sn et de Ce (agents promoteurs) est de 0,3% et de 0,05% après calcination.

La fraction solide d'Al₂O₃ est apportée à 80% poids par la boehmite et à 20% par la charge d'alumine y. Cette suspension contient, en outre, un agent porogène et un tensioactif. L'agent porogène est une phase organique comprenant un mélange de paraffines contenant entre 10 et 12 atomes de carbone dont la température d'ébullition est d'environ 290°C et de densité 0,75 g/cm³. Le tensioactif est du Galoryl. Ces composés sont introduits dans les proportions suivantes : fraction massique de porogène / eau = 1,6% et fraction massique de tensio actif / porogène = 6%.

Le système est soumis à une agitation à 600 rpm jusqu'à l'obtention d'une suspension aux propriétés rhéologiques adaptées à son égouttage (viscosité 250MPa.s).

La mise en forme par coagulation en goutte est effectuée selon l'exemple 1. Les billes sont récupérées en fond de colonne et placées dans une étuve ventilée à 120°C sous air humide contenant 200g d'eau / kg air sec pendant 12h. Elles sont ensuite calcinées sous air sec à 650°C pendant 3 heures. Les billes obtenues ont un diamètre de 1,9 mm.

### Exemple 10 (selon l'invention)

Le support de l'exemple 10 est préparé en utilisant la boehmite synthétisée dans l'exemple 2.

Une suspension contenant 20% de matière minérale (exprimée en % d'Al₂O₃) est préparée en mélangeant une charge d'alumine y ayant un diamètre médian en volume D50=10µm et la boehmite de l'exemple 2 dans une solution aqueuse acidifiée contenant 3,5% masse d'HNO₃/Al₃O₃. A cette suspension ont été incorporées des quantités de SnCl₂ et de H₃PO₄ suffisantes pour obtenir un support dont le pourcentage en poids de Sn et de P sont de 0,3% et 0,4% respectivement, après calcination.

La fraction solide d'Al₂O₃ est apportée à 80% poids par la boehmite et à 20% par la charge d'alumine γ. Cette suspension contient, en outre, un agent porogène et un tensioactif. L'agent porogène est une phase organique comprenant un mélange de paraffines contenant entre 10 et 12 atomes de carbone dont la température d'ébullition est d'environ 290°C et de densité 0,75 g/cm³. Le tensioactif est du Galoryl. Ces composés sont introduits dans les proportions suivantes : fraction massique de porogène / eau = 1,6% et fraction massique de tensio actif / porogène = 6%.

Le système est soumis à une agitation à 600 rpm jusqu'à l'obtention d'une suspension aux propriétés rhéologiques adaptées à son égouttage (viscosité 250MPa.s).

La mise en forme par coagulation en goutte est effectuée selon l'exemple 1. Les billes sont récupérées en fond de colonne et placées dans une étuve ventilée à 120°C sous air humide contenant 200g d'eau / kg air sec pendant 12h. Elles sont ensuite calcinées sous air sec à 650°C pendant 3 heures. Les billes obtenues ont un diamètre de 1,9 mm.

### Exemple 11 (selon l'invention)

Une boehmite a été synthétisée par alcalinisation d'une solution de nitrate d'aluminium 0,1 mol.L⁻¹ par une solution de soude 1 mol.L⁻¹ à température ambiante et pH contrôlé autour de 10. La suspension est ensuite mûrie une semaine à l'étuve à 95°C sans agitation. Le pH de la suspension après mûrissement évolue ; le pH final est égal à 11,5. Le solide est récupéré par filtration puis lavé dans un volume d'eau environ égal au volume de départ, puis séché sous courant d'air, à température ambiante. La poudre de boehmite présente un diagramme de diffraction des rayons X dont le rapport des tailles de cristallites selon les directions [020] et [120] obtenues par la formule de Scherrer est de 0,79.

Le support de l'exemple 11 est préparé en utilisant la boehmite ainsi synthétisée.

Une suspension contenant 20% de matière minérale (exprimée en % d'Al₂O₃) est préparée en mélangeant une charge d'alumine y ayant un diamètre médian en volume D50=50µm et la poudre de boehmite dans une solution aqueuse acidifiée contenant 10% masse d'HNO₃/Al₂O₃.

La fraction solide d'Al₂O₃ est apportée à 88% poids par la boehmite et à 12% poids par la charge d'alumine y. Le système est soumis à une agitation à 400 rpm.

Une émulsion contenant un agent porogène, un tensioactif et de l'eau est rajoutée au bout d'une heure à la suspension précédente. L'agent porogène est une phase organique comprenant un mélange de paraffines contenant entre 10 et 12 atomes de carbone dont la température d'ébullition est d'environ 290°C et de densité 0,75 g/cm³. Le tensioactif est du Galoryl. Ces composés sont introduits dans les proportions suivantes : fraction massique de porogène / eau = 1,6% et fraction massique de tensio actif / porogène = 6%.

Le système (suspension+émulsion) est soumis à une agitation à 200 rpm jusqu'à l'obtention d'une suspension aux propriétés rhéologiques adaptées à son égouttage (viscosité 250MPa.s).

La mise en forme par coagulation en goutte est effectuée selon l'exemple 1. Les billes sont récupérées en fond de colonne et placées dans une étuve ventilée à 120°C sous air humide contenant 200g d'eau / kg air sec pendant 12h. Elles sont ensuite calcinées sous air sec à 650°C pendant 3 heures. Les billes obtenues ont un diamètre de 1,9 mm.

Les particules obtenues à partir des exemples ci-dessus ont été analysées selon diverses techniques. En particulier on a mesuré leur surface spécifique B.E.T, la valeur d'EGG (écrasement grain à grain) selon la méthode ASTM D4179-88a et enfin déterminé leur volume poreux via isotherme d'adsorption N2 et leur volume d'adsorption au mercure. Les isothermes d'adsorption d'azote et les porosimétries au mercure ont été effectuées en suivant respectivement les normes D3663-03 et D4284-03 citées dans le brevet. L'isotherme d'adsorption d'azote a été effectuée sur un appareil Micromeritics ASAP 2420, et l'intrusion au mercure sur un appareil Autopore 9500 - Micromeritics.

Les résultats des mesures mentionnées ci-dessus ont été rassemblés dans le tableau 1.

**Tableau 1**

| **Exemple** | **V méso (ml/g)** | **V méso+macro (ml/g)** | **Ratio Q = [(V_{méso+macro} - V_{méso}) / (V_{méso+macro})] ^{*}100** | **EGG (daN)** | **Surface BET (m²/g)** | **Densité en remplissage tassée (g/mL)** |
|---|---|---|---|---|---|---|
| 1 (comparatif) | **0.64** | **0.74** | **14.2** | **2.2** | **207** | **0.55** |
| 2 (selon l'invention) | **0.69** | **0.71** | **2.8** | **4.0** | **191** | **0.59** |
| 3 (selon l'invention) | **0.72** | **0.73** | **1.4** | **4.5** | **187** | **0.56** |
| 4 (selon l'invention) | **0.75** | **0.77** | **2.6** | **5.6** | **185** | **0.54** |
| 5 (selon l'invention) | **0.68** | **0.72** | **5.5** | **3.9** | **195** | **0.58** |
| 6 (selon l'invention) | **0.69** | **0.71** | **2.8** | **4.5** | **193** | **0.59** |
| 7 (selon l'invention) | **0.69** | **0.71** | **2.8** | **5.0** | **190** | **0.60** |
| 8 (selon l'invention) | **0.70** | **0.72** | **2.8** | **5.3** | **192** | **0.59** |
| 9 (selon l'invention) | **0.69** | **0.71** | **2.8** | **4.9** | **192** | **0.58** |
| 10 (selon l'invention) | **0.69** | **0.70** | **1.4** | **4.9** | **190** | **0.59** |
| 11 (selon l'invention) | **0.69** | **0.70** | **1.4** | **4** | **197** | **0.59** |

Les particules sphéroïdales d'alumine selon l'invention présentent donc une résistance à l'écrasement améliorée. Ainsi la valeur d'EGG est d'au moins 3,9 daN (exemple 5) et atteint même 5,6 daN (exemple 4) contre 2,2 daN pour l'exemple comparatif. Cette amélioration peut être expliquée par une diminution relative du volume des pores macroporeux. En effet, le volume macroporeux représente environ 14% du volume poreux total pour l'exemple comparatif tandis que pour les exemples selon l'invention, ce pourcentage varie entre 1,4 et 5,5%. Enfin, il est à noter que ces effets techniques ont été obtenus en réduisant la quantité d'agent porogène mise en œuvre lors de la synthèse des particules.

## Revendications

1. Particules sphéroïdales d'alumine comprenant un volume d'isotherme d'adsorption d'azote, appelé V_{méso}, représentatif du volume mésoporeux, qui est compris entre 0,65 et 0,85 mL/g et un volume des pores de diamètre inférieur à 7 µm, appelé V_{meso+macro}, mesuré par porosimétrie au mercure, qui est compris entre 0,65 et 0,85 mL/g et pour lesquelles le ratio Q = [(V_{méso+macro} - V_{méso}) / (V_{méso+macro})] est inférieur à 10%, lesdites particules comprenant un diamètre moyen compris entre 1,2 et 3 mm, une surface spécifique B.E.T. comprise entre 150 et 300 m²/g et une valeur de densité de remplissage tassée comprise entre 0,5 et 0,6 g/ml.

2. Particules sphéroïdales d'alumine selon la revendication 1, dans lesquelles la valeur moyenne d'écrasement grain par grain est d'au moins 2,5 daN.

3. Catalyseur comprenant un support formé de particules selon la revendication 1 à 2 et un ou plusieurs métaux choisis dans le groupe VIII.

4. Catalyseur selon la revendication 3, comprenant en outre un ou plusieurs éléments choisis dans les groupes IIIA, IVA, VA et les lanthanides.

5. Catalyseur selon l'une des revendications 3 ou 4 comprenant en outre un élément choisi parmi le groupe constitué par le fluor, le chlore, le brome et l'iode.

6. Catalyseur selon la revendication 5, comprenant du platine, de l'étain et du chlore.

7. Procédé de fabrication de particules sphéroïdales d'alumine selon l'une des revendications 1 ou 2 comprenant les étapes suivantes :
a) préparation d'une suspension consistant en de l'eau, un acide, éventuellement une charge d'alumine ou de précurseur d'alumine constituée de particules ayant un diamètre médian en volume inférieur ou égal à 50 µm, et au moins une poudre de boehmite dont le rapport des tailles de cristallites selon les directions [020] et [120] obtenues par la formule de Scherrer en diffraction des rayons X est compris entre 0,7 et 1 ;
b) ajout d'un agent porogène, d'un tensioactif et éventuellement de l'eau, ou d'une émulsion comprenant au moins un agent porogène, un tensioactif et de l'eau à la suspension de l'étape a) ;
c) mélange de la suspension obtenue à l'étape b) ;
d) mise en forme des particules sphéroïdales par coagulation en goutte à partir de la suspension obtenue à l'étape c) ;
e) séchage des particules obtenues à l'étape d) ;
f) calcination des particules obtenues à l'étape e),
dans lequel l'agent porogène est une coupe pétrolière présentant un point d'ébullition compris entre 220 et 350°C.

8. Procédé selon la revendications 7, dans lequel la charge d'alumine est choisie dans le groupe formé par l'hydrargilite, la bayerite, les gels amorphes, les alumines dites de transition comportant au moins une phase rhô, chi, êta, gamma, kappa, thêta, delta et alpha.

9. Procédé selon l'une des revendications 7 ou 8, dans lequel le rapport en poids de charge d'alumine sur le poids total d'Al₂O₃ de la suspension est inférieur ou égal à 30%.

10. Procédé selon l'une des revendications 7 à 9, dans lequel le taux d'agent porogène, exprimé comme étant le rapport de la masse d'agent porogène sur la masse totale d'eau engagée dans la suspension obtenue à l'étape b), est compris entre 0,5 et 8%.

11. Procédé selon l'une des revendications 7 à 10, dans lequel l'étape c) de mise en forme des particules comprend les étapes suivantes:
a) transfert de la suspension dans un pot d'égouttage équipé de buses dont les orifices sont calibrés pour former des gouttelettes;
b) égouttage de la suspension par gravitation dans une colonne contenant une phase organique non-miscible à l'eau en partie supérieure et une phase aqueuse basique en partie inférieure de sorte à récolter les particules sphéroïdales en sortie de la phase aqueuse basique.

12. Utilisation d'un catalyseur selon l'une des revendications 3 à 6 ou préparé selon l'une des revendications 7 à 11 pour réaliser des réactions de transformation choisies parmi le reformage catalytique, le reformage à la vapeur, le craquage, l'hydrocraquage, l'hydrogénation, la déshydrogénation, la déshydrocyclisation d'hydrocarbures ou autres composés organiques.

## Patentansprüche

1. Kugelähnliche Aluminiumoxidpartikel, die ein Stickstoffadsorptionsisothermen-Volumen, das als Vₘₑₛₒ bezeichnet wird und für das Mesoporenvolumen steht, im Bereich von 0,65 bis 0,85 mL/g und ein Volumen an Poren mit einem Durchmesser von weniger als 7 µm, das als V_{meso+macro} bezeichnet wird und mittels Quecksilberporosimetrie gemessen wird, im Bereich von 0,65 bis 0,85 mL/g umfassen, wobei die Partikel ein Verhältnis Q = [ (V_{meso+macro} - Vₘₑₛₒ) / (V_{meso+macro}) ] haben, das geringer als 10 % ist, wobei sie einen mittleren Durchmesser im Bereich von 1,2 bis 3 mm, eine spezifische BET-Oberfläche im Bereich von 150 bis 300 m²/g und einen Wert der gerüttelten Fülldichte im Bereich von 0,5 bis 0,6 g/mL umfassen.

2. Kugelähnliche Aluminiumoxidpartikel nach Anspruch 1, wobei ihr mittlerer Wert des kornweisen Zerquetschens mindestens 2,5 daN beträgt.

3. Katalysator, der einen Träger, welcher aus Partikeln nach Anspruch 1 bis 2 gebildet ist, sowie ein oder mehrere Metalle umfasst, welche aus der Gruppe VIII gebildet sind.

4. Katalysator nach Anspruch 3, wobei er darüber hinaus ein oder mehrere Elemente umfasst, die aus den Gruppen IIIA, IVA, VA und den Lanthaniden ausgewählt sind.

5. Katalysator nach einem der Ansprüche 3 oder 4, der darüber hinaus ein Element umfasst, welches aus der Gruppe ausgewählt ist, die aus Fluor, Chlor, Brom und Iod besteht.

6. Katalysator nach Anspruch 5, wobei er Platin, Zinn und Chlor umfasst.

7. Verfahren zur Herstellung von kugelähnlichen Aluminiumoxidpartikeln nach einem der Ansprüche 1 oder 2, wobei es die folgenden Schritte umfasst:
a) Herstellen einer Suspension, die aus Wasser, einer Säure, möglicherweise einer Charge aus Aluminiumoxid oder einer Aluminiumoxidvorstufe, welche aus Partikeln besteht, die einen volumenbezogenen Medianwert des Durchmessers von höchstens 50 µm haben, und aus einem Boehmitpulver besteht, bei welchem das Größenverhältnis der Kristallite gemäß den Richtungen [020] und [120], wie sie anhand der Scherrer-Gleichung mittels Röntgenbeugung erhalten wurden, um Bereich von 0,7 bis 1 liegt;
b) Zusetzen eines porenbildenden Mittels, eines Tensids und möglicherweise von Wasser, oder einer Emulsion, die mindestens ein porenbildendes Mittel, ein Tensid und Wasser umfasst, zu der Suspension des Schrittes a);
c) Durchmischen der Suspension, wie sie in Schritt b) erhalten wurde;
d) Formen der kugelähnlichen Partikel mittels Tropfenkoagulation ausgehend von der Suspension, wie sie in Schritt c) erhalten wurde;
e) Trocknen der Partikel, welche in Schritt d) erhalten wurden;
f) Brennen der Partikel, welche in Schritt e) erhalten wurden,
wobei es sich bei dem porenbildenden Mittel um eine Erdölfraktion handelt, die einen Siedepunkt im Bereich von 220 bis 350 °C aufweist.

8. Verfahren nach Anspruch 7, wobei die Aluminiumoxidcharge aus der Gruppe ausgewählt ist, welche aus Hydrargillit, Bayerit, amorphen Gelen, sogenannten Übergangsaluminiumoxiden gebildet ist, welche mindestens eine rho-, chi-, eta-, gamma-, kappa-, theta-, delta- und alpha-Phase aufweisen.

9. Verfahren nach einem der Ansprüche 7 oder 8, wobei das Gewichtsverhältnis der Aluminiumoxidcharge zum Gesamtgewicht an Al₂O₃ der Suspension höchstens 30 % entspricht.

10. Verfahren nach einem der Ansprüche 7 bis 9, wobei der Gehalt an porenbildendem Mittel, ausgedrückt als Verhältnis der Masse an porenbildendem Mittel zur Gesamtmasse an Wasser, die in der Suspension eingesetzt wurde, wie sie in Schritt b) erhalten wird, im Bereich von 0,5 bis 8 % liegt.

11. Verfahren nach einem der Ansprüche 7 bis 10, wobei der Schritt c) des Formens der Partikel die folgenden Schritte umfasst:
a) Überführen der Suspension in ein Abtropfgefäß, das mit Düsen versehen ist, deren Öffnungen derart bemessen sind, dass sich Tröpfchen bilden;
b) Abtropfenlassen der Suspension durch Schwerkraft in einer Kolonne, die im oberen Abschnitt eine organische Phase, die nicht mit Wasser mischbar ist, und im unteren Abschnitt eine basische wässrige Phase enthält, sodass die kugelähnlichen Partikel ausgangsseitig der basischen wässrigen Phase erhalten gewonnen werden.

12. Verwendung eines Katalysators nach einem der Ansprüche 3 bis 6, oder der nach einem der Ansprüche 7 bis 11 hergestellt wurde, zur Durchführung von Umwandlungsreaktionen, die aus der katalytischen Reformierung, der Dampfreformierung, dem Cracken, dem Hydrocracken, dem Hydrieren, der Wasserstoffabspaltung, dem Ringschluss von Kohlenwasserstoffen oder sonstigen organischen Verbindungen unter Wasserstoffabspaltung ausgewählt sind.

## Claims

1. Spheroidal alumina particles comprising a nitrogen adsorption isotherm volume, referred to as Vₘₑₛₒ, which is representative of the mesopore volume, of between 0.65 and 0.85 mL/g and a sub-7 µm diameter pore volume, referred to as V_{meso+macro}, measured by mercury porosimetry, of between 0.65 and 0.85 mL/g, and for which the ratio Q = [ (V_{meso+macro}-Vₘₑₛₒ) / (V_{meso+macro}) ] is less than 10%, said particles comprising a mean diameter of between 1.2 and 3 mm, a BET specific surface area of between 150 and 300 m²/g and a tapped packing density value of between 0.5 and 0.6 g/ml.

2. Spheroidal alumina particles according to Claim 1, wherein the mean particle-to-particle crush strength is at least 2.5 daN.

3. Catalyst comprising a support formed of particles according to Claims 1 and 2 and one or more metals selected from the group VIII.

4. Catalyst according to Claim 3, further comprising one or more elements selected from the groups IIIA, IVA, VA and the lanthanides.

5. Catalyst according to either of Claims 3 and 4, further comprising an element selected from the group consisting of fluorine, chlorine, bromine and iodine.

6. Catalyst according to Claim 5, comprising platinum, tin and chlorine.

7. Method for producing spheroidal alumina particles according to either of Claims 1 and 2, comprising the following steps:
a) preparing a suspension consisting of water, an acid, optionally a charge of alumina or alumina precursor, consisting of particles having a volume median diameter of less than or equal to 50 µm, and at least one boehmite powder in which the ratio of the crystallite sizes in directions [020] and [120] obtained by the Scherrer formula in X-ray diffraction is between 0.7 and 1;
b) adding a pore-forming agent, a surfactant and optionally water, or an emulsion comprising at least one pore-forming agent, one surfactant and water, to the suspension in step a);
c) mixing the suspension obtained in step b);
d) shaping spheroidal particles by drop coagulation from the suspension obtained in step c);
e) drying the particles obtained in step d);
f) calcining the particles obtained in step e), wherein the pore-forming agent is a petroleum fraction having a boiling point of between 220 and 350°C.

8. Method according to Claim 7, wherein the alumina charge is selected from the group consisting of hydrargilite, bayerite, amorphous gels and aluminas referred to as transition aluminas, comprising at least one rho, chi, eta, gamma, kappa, theta, delta and alpha phase.

9. Method according to either of Claims 7 and 8, wherein the weight ratio of alumina charge to the total weight of Al₂O₃ in the suspension is less than or equal to 30%.

10. Method according to any of Claims 7 to 9, wherein the amount of pore-forming agent, expressed as the ratio of the mass of pore-forming agent to the total mass of water employed in the suspension obtained in step b), is between 0.5% and 8%.

11. Method according to any of Claims 7 to 10, wherein the particle shaping step c) comprises the following steps:
a) transferring the suspension to a dropping pot equipped with nozzles having orifices calibrated to form droplets;
b) dropping the suspension by gravitation into a column containing a water-immiscible organic phase in the upper part and a basic aqueous phase in the lower part, so as to recover the spheroidal particles at the exit from the basic aqueous phase.

12. Use of a catalyst according to any of Claims 3 to 6 or prepared according to any of Claims 7 to 11 for performing conversion reactions selected from catalytic reforming, steam reforming, cracking, hydrocracking, hydrogenation, dehydrogenation and dehydrocyclization of hydrocarbons or other organic compounds.
